# EUROPEAN PATENT SPECIFICATION

(11) **EP 3 458 189 B1**
(45) Date of publication and mention of the grant of the patent: **06.01.2021**
(21) Application number: 17729935.1
(22) Date of filing: 17.05.2017
(51) Int. Cl.: B01J 19/00, B01J 3/03, F16J 15/06, B65D 41/06, F16J 13/12

(54) **TANK CLOSING UNIT**
TANKVERSCHLUSSEINHEIT
UNITÉ DE FERMETURE DE RÉSERVOIR

(30) Priority: 21.05.2016 PL 41728116
(43) Date of publication of application: 27.03.2019
(73) Proprietor: Enbio Technology Sp. z o.o., 81-300 Gdynia (PL)
(72) Inventor: KRAJCZYNSKI, Marek, PL-81-326 Gdynia (PL); FIDURSKI, Marcin, PL-13-200 Dzialdowo (PL)
(74) Representative: Kwapich, Anna
(86) International application number: PCT/PL2017/000053
(87) International publication number: WO 2017/204666

(56) References cited:
- WO-A1-2004/096427
- JP-A- 2011 020 730
- US-A- 2 916 143
- US-A1- 2015 145 170

## Description

The invention concerns a tank closing unit. The solution can be used as a closing for different types of tanks or containers, pressure tanks/containers in particular, especially autoclaves.

Known are many solutions concerning the execution of tight and secure tank closing units, pressure tanks in particular, including different structures and methods of closing the autoclave process chamber. Tightness of the contact point between the lid and the tank is secured with seals of the O-ring or similar type, or seals of other shapes matching the shape of the tank edge, placed between the tank edge or flange and the lid, where the seal is usually fixed to the lid, and where the lid is also provided with technical measures of various kinds which enable placing it on or removing from the tank, or turning it. When downforce is applied, the seals get pre-compressed, and the lid is placed in the position in which it can be closed with elements designed especially for the purpose, some of them of a very complex structure. Irrespective of the structural details, tightness is secured in the known solutions by pressing the seal tightly against the tank edge or flange. Known are also simple solutions which enable closing containers with lids without full tightness ensured, also such in which the sides of the lid contact the outer walls of the container around its mouth, or the sides of the lid contact the inner walls of the container around its mouth, or where the edge of the tank opening fits into the groove in the lid.

Known from European patent application published under No. EP0452603 is a device for closing pressurised vessels in which the lid comprises an upper cover supported around the mouth of the vessel and a lower cover axially associated with the first cover, and an O-ring seal which fits in the throat defined around respective concentric peripheral skirts of the said covers. The seal gets pressed and trapped in the closed position of the lid, when the two covers are pressed against each other. The closing device may be fitted with a calibration ring attached to the mouth of the vessel, with the O-ring being pressed between the skirt of the upper cover and the lower edge of the ring, and the sloping skirt of the lower cover. The seal may also take the form of an elastic strip.

Disclosed in the European patent application published under No. EP0659942 is a sealing element of special structure, placed between the tank cover and flange. It takes the form of a ring with an apron extended in the axial direction, projecting into the tank entrance. In addition, in its top and bottom wall the ring is provided with grooves to accommodate sealing of the O-ring type. Along its outer circumference, the ring disc is fitted with a stabilizing pressure-resistant band. The upper and lower surface of the ring can be provided with concentric grooves. The element is made of a chemically-resistant plastic.

Presented in European patent application published under No. EP0940146 is an autoclave having a chamber with walls ended with a flange on the side of the chamber opening, and a door closing the chamber mouth. The door contacts tightly the chamber mouth thanks to the ring-shaped seal placed on the flange and abutting its protruding edge. The seal is V-shaped in cross section, where one of its resilient ribs is shorter and contacts the flange, whereas the other rib is longer and contacts the door surface. The flange is fitted with a drain aperture. A solenoid valve prevents passage of condensate through the drain aperture during sterilization and opens it at the end of the sterilization cycle so that the water collecting around the seal drains away.

Disclosed in patent publication CN2151315 are different shapes of seals and grooves to accommodate the seals, where the two are placed in between the cover and the flange along the edge of the tank mouth.

Known from patent publication CN104856563 is the structure of a pressure cooker which is tightly closed with a lid with a specially formed seal, the top edge of which contacts the inner side of the lid, and its bottom edge in the shape of a vertical ring which, when the tank is closed with the lid, fits into the groove shaped around the tank mouth on the outside by rolling the tank wall outwards.

US2916143 describes locking means for a pressure vessel, comprising a slotted mouth and a lid. The lid includes a specially formed sealing ring, an internal cylindrical wall to be inserted in the slotted mouth, and projections to rotate into a locking position in the slots.

Known solutions of tight tank closing units are characterised by the complexity of their structure and the need to use special additional equipment which enable using such closing units. Moreover, the multitude of elements necessary to manipulate the lid affects reliability of the devices.

The tank closing unit is composed of a cylindrically shaped tank mouth wall, a seal, and a cylindrical lid fitted with technical measures which enable its putting in, removing, and turning, where the side wall of the lid contacts the inner surface of the mouth wall, and according to the invention is characterised in that the side wall of the lid is fitted with pin-like projections on the outside, and there are sockets in the shape of two-arm notches formed along the edge of the tank mouth wall to accommodate the projections. The arms of the notches form an obtuse angle, where the first arm of each notch contacts obliquely the edge of the mouth wall at an angle, while the second arm runs generally parallel to the mouth wall edge. Formed under the notches, in the mouth wall and parallel to the mouth wall edge, is a groove with a flexible seal seated therein, where the seal contacts the lid. The height of the side wall of the lid under the pin-like projections is identical along the entire circumference of the lid and no smaller than the distance between the bottom edge of the notch and the seal.

The seal is a ring the outer circumference of which is larger than the inner circumference of the tank mouth wall inside the groove.

In the most preferable variant, the projections and notches are spaced regularly.

Especially preferably, the second arm of each notch is inclined towards the mouth wall edge.

In one of the variants of the closing unit the projections are given the form of cylindrical bolts fixed permanently to the side wall of the lid.

In another variant the projections are attained by bending fragments of the side wall of the lid outwards, while not disrupting the continuity of the side wall where it contacts the seal.

In an exemplary embodiment the bottom part of the side wall of the lid is bent towards the lid centre.

In a special embodiment variant the bend of the side wall of the lid unfolds into the bottom wall which forms the lid bottom.

The lid bottom is either concave, flat, or convex.

Most preferably, the seal is of the lip type, with the lips pointing inwards.

The solution according to the invention is advantageous in that it is simple in structure, and at the same time effective and reliable. The structure ensures tank tightness and ease of using the lid fitted with any technical measure enabling the user to grab it without the need to use any special measures to prevent the opening and unsealing of the tank.

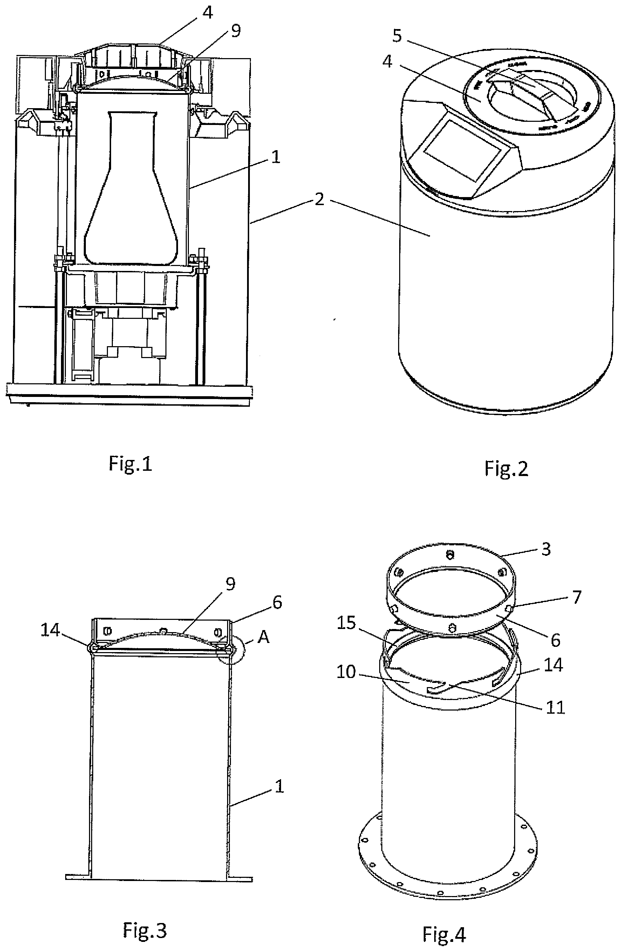

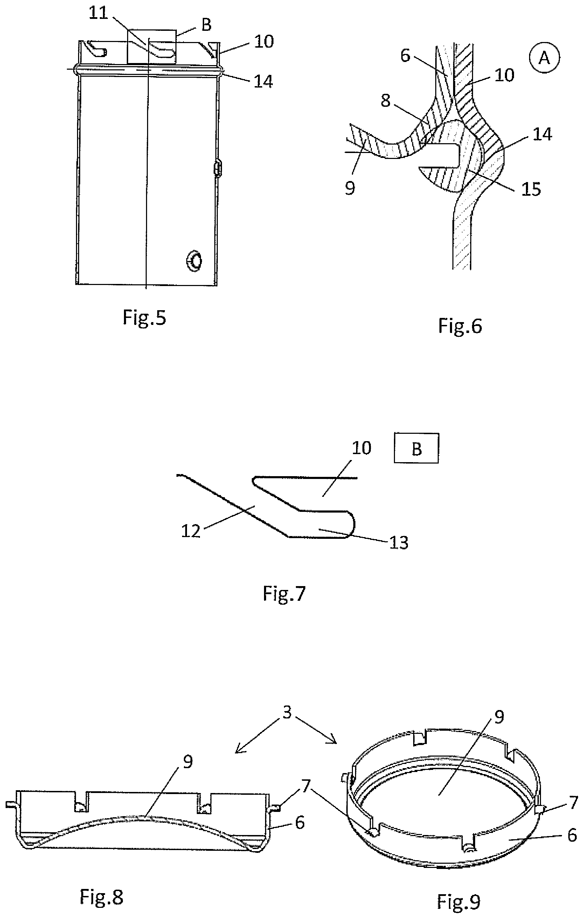

An exemplary embodiment of the tank closing unit is illustrated with a drawing, where Fig. 1 shows an autoclave with the closing unit in longitudinal section, Fig. 2 presents the autoclave from the outside, Fig. 3 shows the tank with the lid closed in longitudinal section, Fig. 4 shows an axonometric view of the tank and lid in the first embodiment variant, Fig. 5 depicts the longitudinal section of the tank, Fig. 6 shows zoomed detail A of Fig. 3, Fig. 7 presents zoomed detail B of Fig. 5, Fig. 8 shows longitudinal section of the lid in the second embodiment variant, and Fig. 9 presents an axonometric view of the lid in the second embodiment variant.

In the embodiment illustrated with the drawing the solution according to the invention serves as the closing unit of a cylindrical tank 1 which is an autoclave process chamber, where the autoclave is placed in a housing 2 fitted with necessary accessories and with fixing, positioning, insulating, and other elements. The tank 1 is closed with a cylindrical lid 3 fitted in the cover 4 featuring a handle 5 for putting the lid 3 on, removing and turning it. Side wall 6 of the lid 3 features six identical pin-like projections 7 around its circumference arranged at even distances to one another and at the same height. The side wall 6 of the lid 3 is arch-bent in its bottom part towards the centre of the lid, whereupon the bend 8 unfolds in an arch into the bottom 9 of the lid 3. In the exemplary embodiment the bottom 9 is concave and has the shape of a circle bow in cross section, as shown in Fig. 1, Fig. 3, and Fig. 8. In other embodiments the bottom 9 may be flat or convex, as required by the specific application. In yet other variants the lid 3 may take the form of a cylinder open at the bottom from the side of the tank and closed on top with a wall of any shape, or take the form of a hollow roll. In the first variant of exemplary embodiment the pin-like projections 7 take the form of cylindrical bolts fixed permanently to the side wall 6, as shown on Fig. 4. The bolts are permanently fixed to the lid using any known technology, e.g. heat-sealing, welding, or screwing into thermally-drilled holes. In another variant illustrated with Fig. 8 and Fig 9 of the drawing, the projections 7 are made by outward bending of fragments of the side wall 6 of the lid above the bottom 9 of the lid, where preferably the bent fragments are arch-shaped. In the top part of the tank 1 the tank mouth wall 10 is cylindrical in shape with the inner diameter corresponding to the outer diameter of the side wall 6 of the lid 3 so that it is possible to put the lid 3 freely into the tank mouth 1 and remove it. Along its circumference, the mouth wall 10 of the tank 1 is provided with six identical two-arm notches 11 spaced regularly at the distances corresponding to the distances between the projections 7, where the notches serve as sockets accommodating the projections 7 once the lid 3 is placed in the mouth of the tank 1. The first arm 12 of each of the notches 11 contacts the edge of the wall of the tank mouth 10 and runs at an angle with respect to the edge, whereupon it unfolds at an obtuse angle into the second arm 13 of the notch, as shown in Fig. 4, Fig. 5 and Fig. 7. The second arm 13 is generally parallel to the edge of the wall of the tank mouth 10, where preferably the second arm is inclined at a small angle (several degrees) with respect to the edge of the wall of the tank mouth 10. The width of the notch 11 (its two arms) is identical along its entire length and matches the dimensions of the projection 7 so that the first arm 12 of each notch 11 serves as a guide, and the second arm 13 as the socket accommodating the projection 7 when the lid 3 is being placed in the mouth of the tank 1. Below the second arms 13 of the notches 11, formed in the wall of tank mouth 10 along its inner circumference is a groove 14 running parallel to the mouth edge, in which a flexible seal 15 is placed. In the exemplary embodiment the wall of the tank mouth 10 is several mm thick and its thickness is identical along the entire height, while the groove 14 is made by spinning. Preferably, the seal 15 is a ring lip seal, the lips of which are pointing towards the centre of the tank 1, and its outer circumference is larger than the inner circumference of the mouth of tank 1 at the level of groove 14 in the wall of the tank mouth 10, which enables easy placement of the seal 15 in the groove 14 and keeping it in place, preventing its accidental falling out. The height of the side wall 6 of the lid 3 under the projections 7 is no smaller than the distance between the lowest edge of the notch 11 and the seal 15, as illustrated in Fig. 6, so that the bend 8 of the side wall 6 of the lid 3 rests on the seal 15 once the lid 3 is placed in the tank mouth, i.e. when the projections 7 are at the level of the second arms 13 of the notches 11.

In the presented embodiment the closing unit is designed for a tank 130 mm in diameter and 230 mm in height, where the tank is an autoclave process chamber and is placed in a housing made of plastic. Along its entire height the tank 1 has the shape of a cylinder closed at the bottom and open at the top, made of stainless steel sheets several mm thick. The groove 14 is made at the level of ca. 30 mm from the edge of the wall of the tank mouth 10. The first arms 12 of the notches 11 in the edge of the wall of the tank mouth 10 are inclined at the angle of ca. 30° and are ca. 10 mm long, and the second arms 13 are ca. 9 mm long and are inclined at the angle of several degrees towards the mouth edge. The lid 3, too, is made of stainless steel sheets several mm thick and is given the shape of a cylinder with concave bottom, where the side wall 6 of the lid unfolds into the bottom 9 in an arched bend 8. The outer projections 7 take the form of steel bolts fixed permanently to the side wall 6, the ends of which inside the lid may be used for fixing the cylindrical cover 4 which, just like the handle 5 shaped thereon, is made of plastic. In the exemplary embodiment the seal 15 is made of silicone of a special type highly dampening microwave radiation, which serves not only as a hydraulic/ pneumatic seal, but also as an electromagnetic sealing.

The procedure of closing the tank 1 with the lid 3 is as follows: once the lid 3 is placed over the tank mouth 1, turning it slightly towards any side using the handle 5 causes the positioning of the projections 7 over the notches 11 and their sliding down along the first arms 12 until they reach the position where the second arms 13 start, following which the lid 3 is once again turned slightly using the handle 5, in effect of which the projections 7 are inserted into the notches until they reach the ends of their second arms 13 thanks to which they are kept securely in position. The slight upward inclination of the ends of the second arms 13 is especially preferable in pressure tanks, as it prevents the tank from opening and unsealing once the pressure in the tank increases.

The disclosed solution may be performed in other variants than the described exemplary variant, while keeping the same major technical features. The closing unit according to the invention can be used for broadly understood tanks of any shape or designation, having a cylindrical wall only around the mouth. Depending on the place of application and designation, the tank and the lid with the closing structure according to the invention, and their housings can be made of different materials and fitted with different accessories. In particular, the lid can be provided with different known technical measures, depending on the needs, which enable placing it in the tank, removing and turning it. The described closing unit proves particularly preferable in any applications requiring tightness of the connection of the tank and its lid and failure-free operation of the closing unit taking into account its frequent opening and closing.

## Claims

1. The tank closing unit composed of a cylindrically shaped tank mouth wall (10), a seal (15), and a cylindrical lid (3) fitted with technical measures which enable its putting in, removing, and turning, where the side wall (6) of the lid (3) contacts the inner surface of the mouth wall (10), **characterised in that** the side wall (6) of the lid (3) is fitted with pin-like projections (7) on the outside, and there are sockets for projections (7) in the shape of two-arm notches (11) formed along the edge of the wall (10) of the mouth of the tank (1), where the arms of the notches form an obtuse angle, and where the first arm (12) of each notch (11) contacts obliquely the edge of the tank mouth wall (10), while the second arm (13) runs generally parallel to the edge of the tank mouth wall (10), and formed under the notches (11), in the mouth wall (10) and parallel to the mouth wall edge, is a groove (14) with a flexible seal (15) seated therein, where the seal contacts the lid (3), wherein the height of the side wall (6) of the lid (3) under the pin-like projections (7) is identical along the entire circumference of the lid (3) and no smaller than the distance between the bottom edge of the notch (11) and the seal (15).

2. The closing unit according to Claim 1 **characterised in that** the seal (15) is a ring, the outer circumference of which is larger than the inner circumference of the mouth wall (10) of the tank (1) inside the groove (14).

3. The closing unit according to Claim 2 **characterised in that** the projections (7) and notches (11) are spaced regularly.

4. The closing unit according to Claim 3 **characterised in that** all notches (11) are identical.

5. The closing unit according to Claim 4 **characterised in that** the second arm (13) of each notch (11) is inclined towards the edge of the mouth wall (10).

6. The closing unit according to Claim 5 **characterised in that** projections (7) are given the form of cylindrical bolts fixed permanently to the side wall (6) of the lid (3).

7. The closing unit according to Claim 5 **characterised in that** the projections (7) are attained by bending fragments of the side wall (6) of the lid (3) outwards, while not disrupting the continuity of the side wall (6) where it contacts the seal (15).

8. The closing unit according to Claims 6 or 7 **characterised in that** bottom part of the side wall (6) of the lid (3) is bent towards the centre of the lid (3).

9. The closing unit according to Claim 8 **characterised in that** the bend (8) of the side wall (6) of the lid (3) unfolds into the bottom wall which forms the bottom (9) of the lid (3).

10. The closing unit according to Claim 9 **characterised in that** the bottom (9) of the lid (3) is concave.

11. The closing unit according to Claim 9 **characterised in that** the bottom (9) of the lid (3) is flat.

12. The closing unit according to Claim 9 **characterised in that** the bottom (9) of the lid (3) is convex.

13. The closing unit according to Claims 1 - 12 **characterised in that** the seal (15) is of the lip type, with the lips pointing towards the centre of the tank.

## Patentansprüche

1. Behälterverschluss bestehend aus der zylindrischen Wand des Lochs (10) des Behälters, der Dichtung (15) und des zylindrischen Deckels (3), der mit technischen Mitteln zum Einsetzen, Entnahme und Drehen ausgerüstet ist, wobei die Seitenwand (6) des Deckels (3) die Innenfläche der Wand des Lochs (10) berührt, **dadurch gekennzeichnet, dass** die Seitenwand (6) des Deckels (3) an der Außenfläche Nasen (7) aufweist und die Wand des Lochs (10) des Behälters (1) an der Kante Schlitze für die Nasen (7) in Form von zweiarmigen Aussparungen (11) aufweist, wobei die Arme einen rechten Winkel bilden, wobei der erste Arm (12) der jeweiligen Aussparung (11) die Kante der Wand des Lochs (10) schräg berührt und der andere Arm (13) grundsätzlich parallel zur Kante der Wand des Lochs (10) ist und unter den Aussparungen (11), in der Wand des Lochs (10), parallel zur unteren Kante eine Vertiefung(14) ausgebildet ist, in welcher die flexible Dichtung (15) sitzt, die einen Kontakt zum Deckel (3) hat, wobei die Höhe der Seitenwand (6) des Deckels (3) unter den Nasen (7) am ganzen Umfang des Deckels (3) gleich und nicht kleiner als der Abstand zwischen der unteren Kante der Aussparung (11) und der Dichtung (15) ist.

2. Behälterverschluss nach Anspruch 1, **dadurch gekennzeichnet, dass** die Dichtung (15) aus einer Ringbesteht und ihr Außenumfang größer ist als der Innenumfang der Wand des Lochs (10) des Behälters (1) in der Vertiefung (14).

3. Behälterverschluss nach Anspruch 2, **dadurch gekennzeichnet, dass** die Nasen (7) und Aussparungen (11) regelmäßig angeordnet sind.

4. Behälterverschluss nach Anspruch 3, **dadurch gekennzeichnet, dass** alle Aussparungen (11) identisch sind.

5. Behälterverschluss nach Anspruch 4, **dadurch gekennzeichnet**, das der zweite Arm (13) jeder Aussparung (11) zur Kante der Wand des Lochs (10) geneigt ist.

6. Behälterverschluss nach Anspruch 5, **dadurch gekennzeichnet, dass** die Nasen (7) als zylindrische Bolzen an der Seitenwand (6) des Deckels (3) dauerhaft befestigt sind.

7. Behälterverschluss nach Anspruch 5, **dadurch gekennzeichnet, dass** die Nasen (7) nach außen gebogene Fragmente der Seitenwand (6) des Deckels (3) sind, wobei die Kontinuität der Seitenwand (6) am Übergang zur Dichtung (15) gewährleistet ist.

8. Behälterverschluss nach Anspruch 6 oder 7, **dadurch gekennzeichnet, dass** die Seitenwand (6) des Deckels (3) im unteren Bereich zur Mitte des Deckels (3) gebogen ist.

9. Behälterverschluss nach Anspruch 8, **dadurch gekennzeichnet, dass** die Biegung (8) der Seitenwand (6) des Deckels (3) in die untere Wand übergeht, die den Boden (9) des Deckels (3) bildet.

10. Behälterverschluss nach Anspruch 9 **dadurch gekennzeichnet, dass** der Boden (9) des Deckels (3) konkav ist.

11. Behälterverschluss nach Anspruch 9 **dadurch gekennzeichnet, dass** der Boden (9) des Deckels (3) flach ist.

12. Behälterverschluss nach Anspruch 9 **dadurch gekennzeichnet, dass** der Boden (9) des Deckels (3) konvex ist.

13. Behälterverschluss nach Anspruch 1 - 12, **dadurch gekennzeichnet, dass** die Dichtung (15) eine Lippendichtung ist, deren Lippen zum Innenraum des Behälters zeigen.

## Revendications

1. Une unité de fermeture de réservoir constituée d'une paroi de l'ouverture (10) de forme cylindrique du réservoir, d'un joint d'étanchéité (15) et d'un couvercle cylindrique (3) équipé de moyens techniques permettant son insertion, son enlèvement et sa rotation, la paroi latérale (6) du couvercle (3) touchant la surface intérieure de la paroi de l'ouverture (10), **caractérisée en ce que** la paroi latérale (6) du couvercle (3) présente des projections (7) sur la surface extérieure et que la paroi de l'ouverture (10) du réservoir (1) présente sur son bord des logements profilés pour les projections (7) sous la forme d'encoches (11) à deux bras, dont les bras forment un angle obtus, où le premier bras (12) de chaque encoche (11) rencontre obliquement le bord de la paroi de l'ouverture (10), et son second bras (13) est essentiellement parallèle au bord de la paroi de l'ouverture (10), et sous les encoches (11), un évidement (14) est formé dans la paroi de l'ouverture (10), parallèlement à son bord, dans lequel un joint d'étanchéité flexible (15) est en contact avec le couvercle (3), la hauteur de la paroi latérale (6) du couvercle (3) sous les projections (7) étant uniforme sur toute la circonférence du couvercle (3) et n'étant pas inférieure à la distance entre le bord inférieur de l'encoche (11) et le joint d'étanchéité (15).

2. L'unité de fermeture selon la revendication 1 **caractérisée en ce que** le joint d'étanchéité (15) est un anneau et a une circonférence extérieure plus grande que la circonférence intérieure de la paroi de l'ouverture (10) du réservoir (1) dans l'évidement (14).

3. L'unité de fermeture selon la revendication 2 **caractérisée en ce que** les projections (7) et les encoches (11) sont disposées régulièrement.

4. L'unité de fermeture selon la revendication 3 **caractérisée en ce que** toutes les encoches (11) sont identiques.

5. L'unité de fermeture selon la revendication 4 **caractérisée en ce que** le second bras (13) de chaque encoche (11) est incliné vers le bord de la paroi de l'ouverture (10).

6. L'unité de fermeture selon la revendication 5 **caractérisée en ce que** les projections (7) ont la forme de tiges cylindriques fixées de manière permanente dans la paroi latérale (6) du couvercle (3).

7. L'unité de fermeture selon la revendication 5 **caractérisée en ce que** les projections (7) se présentent sous la forme de fragments de la paroi latérale (6) du couvercle (3) recourbés vers l'extérieur, tout en conservant la continuité de la paroi latérale (6) à son contact avec le joint d'étanchéité (15).

8. L'unité de fermeture selon les revendications 6 ou 7 **caractérisée en ce que** la paroi latérale (6) du couvercle (3) est pliée en bas vers le centre du couvercle (3).

9. L'unité de fermeture selon la revendication 8 **caractérisée en ce que** le pli (8) de la paroi latérale (6) du couvercle (3) passe dans la paroi inférieure constituant le fond (9) du couvercle (3).

10. L'unité de fermeture selon la revendication 9 **caractérisée en ce que** le fond (9) du couvercle (3) est concave.

11. L'unité de fermeture selon la revendication 9 **caractérisée en ce que** le fond (9) du couvercle (3) est plat.

12. L'unité de fermeture selon la revendication 9 **caractérisée en ce que** le fond (9) du couvercle (3) est convexe.

13. L'unité de fermeture selon les revendications d'1 à 12 **caractérisée en ce que** le joint d'étanchéité (15) est un joint à lèvre avec les lèvres tournées vers l'intérieur du réservoir.
